Europäisches Patentamt

(19) European Patent Office

Office européen des brevets

(11) Publication number: **0 319 055 B1**

(12) **EUROPEAN PATENT SPECIFICATION**

(45) Date of publication of patent specification: 27.12.91    (51) Int. Cl.⁵: **C08L 51/04**, C08L 55/02,
C08F 279/02, C08F 285/00,
C08L 57/00

(21) Application number: 88202414.4

(22) Date of filing: 28.10.88

(54) Thermoplastic elastomer mixture.

(30) Priority: 02.11.87 NL 8702602

(43) Date of publication of application:
07.06.89 Bulletin 89/23

(45) Publication of the grant of the patent:
27.12.91 Bulletin 91/52

(84) Designated Contracting States:
AT BE CH DE ES FR GB GR IT LI NL SE

(56) References cited:
EP-A- 0 080 720          US-A- 3 796 771
US-A- 3 862 265          US-A- 3 919 354
US-A- 3 950 455          US-A- 4 277 574
US-A- 4 301 216

DATABASE WPIL (DERWENT), no.
81-76835D[42]

CHEMICAL ABSTRACTS, vol. 102, no. 6, February 1985, page 17, no. 46472h, Columbus, Ohio, US

CHEMICAL ABSTRACTS, vol. 83, no. 4, 28th July 1975, page 31, no. 29009j, Columbus,

Ohio, US

CHEMICAL ABSTRACTS, vol. 96, no. 26, 26th June 1982, page 43, no. 218734w, Columbus, Ohio, US

(73) Proprietor: DSM N.V.
Het Overloon 1
NL-6411 TE Heerlen(NL)

(72) Inventor: Vroomans, Hubertus Johannes
Spaanse Singel 18
NL-6191 GK Beek (L.)(NL)
Inventor: Bruls, Wilhelmus Gerardus Marie
Gr. Wolterhoenstraat 32
NL-6243 BE Meerssen(NL)

(74) Representative: Hoogstraten, Willem Cornelis
Roeland et al
OCTROOIBUREAU DSM Postbus 9
NL-6160 MA Geleen(NL)

## Description

Thermoplastic elastomer mixture on the basis of a vinylaromatic compound and acrylonitrile on a rubber and a thermoplastic polymer with polar groups.

Such a polymer mixture is already known from EP-A-202214. This patent specification describes a polymer mixture on the basis of (A) a polyamide, (B) an acrylonitrile/butadiene/styrene graft copolymer and (C) a terpolymer obtained through polymerization of styrene, acrylonitrile and maleic acid anhydride. The terpolymer acts as a compatibility enhancing agent.

A drawback of this polymer mixture is that the terpolymer in the mixture first has to be synthesized through polymerization. This requires additional process steps and is therefore costly.

The purpose of the invention is to provide a polymer mixture which does not have said drawback.

This purpose is achieved due to the polymer mixture according to the invention being characterized in that the polymer mixture consists of:

a) 5-99 wt.% of a thermoplastic polymer with polar groups;

b) 1-95 wt.% of a graft copolymer of a copolymer of a vinylaromatic compound and acrylonitrile on a diene rubber, on the rubber moreover being present monomers of a vinylaromatic compound and of a carboxy- and/or imide-containing compound in a molar ratio from 5:1 to 1:5.

Surprisingly, it has been found that the polymer mixture according to the invention possesses an optimum balance of properties, while moreover the graft copolymer of component (b) is very easy to synthesize. Surprising is also the good compatibility of the used components. A homogeneous blend is obtained.

The polymer mixture according to the invention preferably contains:

a) 20-90 wt.% of a thermoplastic polymer with polar groups;

b) 10-80 wt.% of a polymer obtained by polymerizing 40-80 wt.% of a mixture of

- 10-40 wt.% acrylonitrile;
- 60-90 wt.% of a vinylaromatic compound;
- 0-20 wt.% of a third monomer;

in the presence of 20-60 wt.% of a rubber, upon which the polymer obtained by polymerization is brought into a melted state, to which 0.1-25 wt.% monomers of a vinylaromatic compound and of a carboxy-and/or imide-containing compound are added in a molar ratio of 1 : 5 to 5 : 1 and at a temperature of 180¤C-325¤C.

As such the addition of monomers to a polymer in the melted phase is known in the art. In US-A-3.862.265 the addition is described of maleic anhydride and styrene to polyolefins, polybutadiene and butadiene-styrene rubbers in an extruder. DE-A-2943 657 describes the addition of maleic anhydride to a styrene-butadiene block copolymer in an extruder. In the side chains the resulting polymers from said patent specifications only·have separate maleic anhydride and/or styrene units. The polymer according to the invention distinguishes itself from these in that, in additon to these separate units, the polymer also has α-methylstyrene and/or styrene-acrylonitrile copolymers in the side chains so that, when used as compatibilizer in a mixture, also an improvement of the properties of the mixture is achieved, in addition to a higher degree of crosslinking.

NL-A-7102312 describes a process for the preparation of a carboxyl-containing polymer which is prepared by reaction above 120¤C of a mixture of styrene and maleic anhydride with a polymer containing active hydrogen atoms. No indication is given of the good compatibility between the obtained polymer and polymers with polar groups.

Component (b) in the polymer mixture according to the invention thus consists of a polymerized basic polymer built up from a diene rubber with one or more copolymers in the side chains, which is processed in the melt with a vinylaromatic compound and with a carboxy- and/or imide-containing compound.

The basic polymer used is preferably an acrylonitrile-styrene-butadiene rubber (ABS), an acrylonitrile-styrene-acrylate rubber (ASA) or an ethylene-propylene-diene rubber polymerized with styrene and acrylonitrile (AES). More particularly the basic polymer is ABS.

The basic polymer can be synthesized in the manner known in the art, for instance by means of mass polymerization, emulsion polymerization, suspension polymerization or mass-suspension polymerization.

Suitable as vinylaromatic compound in the preparation of the basic polymer are styrene, α-methylstyrene, or derivatives thereof substituted on the aromatic ring. Suitable substituents are alkyl groups, chlorine or bromine. It is possible to use mixtures of two or more vinylaromatic compounds. Acrylonitrile can be replaced in whole or in part by methacrylonitrile.

In addition to the vinylaromatic compound and acrylonitrile one or more other monomers can be used in the preparation of the basic polymer. Of particular importance in this connection are the acrylates, for

2

instance methylmethacrylate and/or ethylacrylate.

The rubber used in the preparation of the basic polymer may in principle be any diene rubber.

Preference is given to the use of polybutadiene-homopolymers or butadiene-copolymers with a butadiene content of 60-90 wt.%. When other dienes, for instance isoprene, or the lower alkyl esters of acrylic acid, are used as comonomers, the butadiene content of the rubber can be reduced to 30 wt.% without any adverse effect on the properties of the basic polymer.

In the polymerization the customary auxiliaries are used, such as chain length regulators, emulsifiers (emulsion polymerization) and compounds supplying free radicals.

Depending on the application of the polymer mixture, it is possible also in the polymerization of component (b) to use two or more butadiene homopolymers which differ from each other in particle size. The particle size ($d_{50}$) must then be smaller than 0.3 $\mu$m, respectively larger than 0.35 $\mu$m. Such a polymer is described in EP-A-116 330. When such a polymer has been processed in the melt with a vinylaromatic compound and with a carboxy- and/or imide-containing substance, it is highly suitable to be used as impact modifier.

The vinylaromatic compound added to the melt of the basic polymer in a mixing device is styrene and/or $\alpha$-methylstyrene. The carboxy- and/or imide-containing compound is chosen from organic acids and/or anhydrides, imides or combinations hereof, for instance maleic anhydride, citraconic acid, itaconic acid, maleimide, N-phenylmaleimide and semi-acid amides. It is possible also, in addition to styrene, to add maleic anhydride together with a primary amine, so as to promote during the mixing the formation of a semi-acid amide.

The choice of the carboxy- and/or imide-containing compound to be added is determined by the application. Thus maleic anhydride and/or maleimide will be added to the polymer if it is used as compatibilizer in a mixture with a polyamide or a polyester. Preference is given to maleic anhydride.

The monomers of the vinylaromatic compound and the carboxy-and/or imide-containing group are added in a molar ratio of 5 : 1 to 1 : 5, preferably 2 : 1 to 1 : 2. Component (b) in the polymer mixture according to the invention must contain 0.1-25 wt.% of the vinylaromatic compound and the carboxy- and/or imide-containing compound.

Component (b) preferably contains 1-20 wt.% of the vinylaromatic compound and the carboxy- and/or imide-containing compound, more particularly 1-10 wt.%.

The addition of the monomers to the basic polymer can be done in a manner described in US-A-3862265. It is important for the monomers to be added to the melt of the basic polymer while intensive mixing takes place. It is not necessary in the process to use a solvent and/or a radical catalyst. It has been found, however, that the addition of a solvent, particularly a polar solvent, for instance acetone, methylethylketone and/or an initiator, particularly a peroxide or an azo compound, increases the grafting rate, as well as the rate of conversion.

The polymer according to component (b) is obtained from a basic polymer consisting of at least a vinylaromatic compound and a diene rubber with a plurality of monomers applied to the diene rubber, characterized in that on the main chain of the thermoplastic polymer, which main chain is built up from at least a diene rubber and from one or more side chains built up from at least a copolymer of a vinylaromatic compound and acrylonitrile, monomers of a vinlyaromatic compound and of a carboxy- and/or imide-containing compound are applied, and which is prepared by injecting monomers of styrene and/or $\alpha$-methylstyrene and monomers of a carboxy- and/or imide-containing compound in a molar ratio of 5 : 1 to 1 : 5 at a temperature of 180¤C-325¤C into a mixing device, the basic polymer being present in the mixing device in a melted state, in which process the polymer has been obtained by polymerizing 40-80 wt.% of a mixture of:

- 10-40 wt.% acrylonitrile;
- 60-90 wt.% styrene and $\alpha$-methylstyrene;
- 0-20 wt.% of one or more monomers; in the presence of 60-20 wt.% of a diene rubber.

Preferably the monomers are added to a polar solvent at room temperature and this mixture is injected to the melt of the basic polymers.

The temperature in the mixing device is preferably 190-300¤C, more particularly 200-250¤C.

It is important for the monomers to be added at the place where the basic polymer is present in the melt, so that the grafting, during intensive mixing, can take place at once.

To the extruder can be supplied also, in addition to a solvent and a radical initiator, the usual auxiliaries, for instance an anti-oxidant.

A solvent, for instance acetone, is added in a weight ratio of 5 : 1 to 1 : 20, preferably 2 : 1 to 1 : 10, to the monomers to be added. A radical catalyst, for instance dialkylperoxides, diacylperoxides, diacrylperoxides, organic peracids, organic peracid esters, alkylhydroperoxides and azo compounds, is added in an

EP 0 319 055 B1

amount of 0.01 to 0.5 wt.% calculated on the basic polymer. A highly suitable antioxidant is Irganox 1076[R], Irganox 1010[R] or di-tert.-butyl-p-cresol.

The residence time in the mixing device is preferably 1 to 15 minutes. Any non-converted monomers and the solvent can be removed in the usual manner, for instance by degassing. The polymer according to the invention can subsequently be granulated or be processed to form a moulding compound.

The mixing device in which the monomers are added to the basic polymer is, for instance, a batch kneader or a single or twin-screw extruder. The mixing device is preferably a single or twin-screw extruder. After the mixing device a static mixer may yet have been placed, so that an extension of the residence time is possible.

The polymer mixture according to the invention is suitable to be mixed, in amounts of 5-95 wt.%, preferably 10-80 wt.%, more particularly 40-60 wt.%, with a polymer which contains polar groups. Examples of such polymers are: polycarbonates, polyacetals, vinylaromatic polymers, polyamides, polyesters, polyvinylchloride polymers or mixtures of these polymers. The polymer according to the invention is then mixed with the above-mentioned polymers in an extruder in a manner known in the art. Preference is given to Polyamide. Component b) is mixed with polyamide in the molten state at a temperature between 200 - 250 °C.

Polyamides are understood to comprise the conventional polyamide resins known under the name of nylons, including the aliphatic polylactams, such as polycaprolactam and nylon 6.

The polyamides are obtained by polycondensation of aliphatic, alicyclic and aromatic diamines and dicarboxylic acids or by anionic polymerization of lactams, for instance poly-$\epsilon$-caprolactame. With these, polyamides can be obtained, such as nylon 4,6, nylon 6,6, nylon 6,10, nylon 9, nylon 11, nylon 12, nylon 6/6,6, nylon 6,6/6,10 and nylon 6/11.

To the polymer mixture according to the invention the usual additives can be added, for instance glass, stabilizers, lubricants and the organic and inorganic fillers and reinforcing agents.

Objects can be made partly or wholly from the polymer mixture according to the invention.

The invention is further elucidated with the following examples without being limited thereto.

Examples I-III

ABS, with a rubber content of 40 wt.% and, calculated on the SAN phase, 27 wt.% acrylonitrile were supplied to a ZSK 30 D twin-screw extruder (speed 150 rpm, temperature 210□C). The throughput rate was 4 kg/hour.

To the ABS melt were added by injection, styrene (S), maleic anhydride (MA) and acetone in a ratio of 2/2/1. The polymer obtained was cooled, dried and granulated. The resulting granulate was processed on an Arburg-1 injection-moulding machine to form test plates.

Of the resulting plates the Izod (according to ISO 180, 23□C) and the HDT (according to ASTM D 648) were determined.

The results are shown in table 1.

TABLE 1

| Example | Injection S/MA/Acetone ml/min | MA incorporation % (wt) | Izod | HDT |
|---------|-------------------------------|-------------------------|------|-----|
| I | 3.4 | 2.4 | 40 | 87 |
| II | 6.8 | 4.0 | 42 | 87 |
| III | 10.2 | 4.5 | 42 | 88 |

Example IV-VII

A mixture is prepared using:
- a polyamide, Ultramid B[3R], BASF
- the component of example I.

The components were supplied to a Berstoff 25 extruder. Throughput rate was 7 kg/h, temperature 220-245 °C.

Results are shown in table 2.

TABLE 2

| Example | PA wt.% | Comp. ex. I wt.% | Izod notched | |
|---|---|---|---|---|
| | | | 23¤C | 0¤C |
| IV | 40 | 60 | 80 | 17 |
| V | 45 | 55 | 75 | 18 |
| VI | 50 | 50 | 73 | 23 |
| VII | 55 | 45 | 59 | 21 |

Comparative example A

A mixture of unmodified ABS (rubber content 40 wt.%, an 27 wt.% Acrylonitrile calculated on the SAN-phase) and polyamide (Ultramid B3 [R]) was prepared as described in example V.

ABS        : 55 wt.%
PA          : 45 wt.%
Izod notched    : 4.5.

Comparative example B/C

ABS and polyamide (same components as example A) and a copolymer of styrene/maleic anhydride (SMA, maleic anhydride content 14 wt.%, mole weight 200.000) were mixed as described in example V. Results in table 3.

TABLE 3

| ex. | ABS wt.% | PA wt.% | SMA wt.% | Izod notched 23¤C |
|---|---|---|---|---|
| B | 50 | 35 | 15 | 5.7 |
| C | 55 | 40 | 5 | 6 |

**Claims**

1. Thermoplastic polymer mixture on the basis of a vinylaromatic compound and acrylonitrile on a rubber and a thermoplastic polymer with polar groups, characterized in that the polymer mixture consists of:

   a) 5-99 wt.% of a thermoplastic polymer with polar groups;

   b) 1-95 wt.% of a graft copolymer of a copolymer of a vinylaromatic compound and acrylonitrile on a diene rubber, on the rubber moreover being present 0.1-25 wt.% monomers of a vinylaromatic compound and of a carboxy- and/or imide-containing compound in a molar ratio from 5 : 1 to 1 : 5.

2. Thermoplastic polymer mixture according to claim 1, characterized in that the polymer mixture consists of:

   a) 20-90 wt.% of a thermoplastic polymer with polar groups, and

   b) 10-80 wt.% of a polymer mixture which has been obtained by polymerizing 40-80 wt.% of a mixture of

   - 10-40 wt.% acrylonitrile;
   - 60-90 wt.% of a vinylaromatic compound;
   - 0-20 wt.% of a third monomer,

   in the presence of 20-60 wt.% of a diene rubber, upon which the resulting basic polymer is brought into a melted state, to which 0.1-25 wt.% monomers of a vinylaromatic compound and of a carboxy- and/or imide-containing compound calculated on the basic polymer are added in a molar ratio of 5 : 1 to 1 : 5, and at a temperature of 180¤C-325¤C.

3. Thermoplastic polymer mixture according to any one of claims 1-2, characterized in that component b)

EP 0 319 055 B1

contains 1-20 wt.% monomers of a vinylaromatic compound and of a carboxy- and/or imide-containing compound.

4. Thermoplastic polymer mixture according to any one of claims 1-3, characterized in that the vinylaromatic compound is styrene and/or α-methylstyrene.

5. Thermoplastic polymer mixture according to any one of claims 1-4, characterized in that the carboxy- and/or imide-containing compound is chosen from maleic anhydride, itaconic acid, citraconic acid, N-phenylmaleimide, maleimide and/or a semi-acid amide.

6. Thermoplastic polymer mixture according to any one of claims 1-5, characterized in that the polymer with polar groups is a polyamide.

7. Process for producing a thermoplastic polymer mixture according to anyone of claims 1-6 in which component b) is obtained from a basic polymer consisting of at least a vinylaromatic compound and a diene rubber with a plurality of monomers applied to the diene rubber, characterized in that on the main chain of the thermoplastic polymer, which main chain is built up from at least a diene rubber and from one or more side chains built up from at least a copolymer of a vinylaromatic compound and acrylonitrile, monomers of a vinylaromatic compound and of a carboxy- and/or imide-containing compound are applied in a relative molar ratio of 5 : 1 to 1 : 5 by mixing these monomers in a mixing device with the melt of the basic polymer at a temperature of 180-325ᴈC and a residence time of 1-15 minutes, after which the resulting component is mixed with a polyamide in molten state at a temperature between 200-250ᴈC.

8. Object partly or wholly made from a polymer mixture according to any one of the claims 1-6.

**Revendications**

1. Mélange polymère thermoplastique à base d'un composé vinylaromatique et d'acrylonitrile sur un caoutchouc et un polymère thermoplastique comportant des groupes polaires, caractérisé en ce que le mélange comprend :
   (a) 5 à 99% en poids d'un polymère thermoplastique comportant des groupes polaires ;
   (b) 1 à 95% en poids d'un copolymère greffé d'un copolymère d'un composé vinylaromatique et d'acrylonitrile sur un caoutchouc diène, le caoutchouc pouvant en outre porter de 0,1 à 25% en poids de monomères d'un composé vinylaromatique et d'un composé contenant des groupes carboxy et/ ou imide dans un rapport molaire de 5:1 à 1:5.

2. Mélange polymère thermoplastique selon la revendication 1, caractérisé en ce qu'il comprend :
   (a) 20 à 90% en poids d'un polymère thermoplastique comportant des groupes polaires et
   (b) 10 à 80% en poids d'un mélange polymère qu'on obtient en polymérisant 40 à 80% en poids d'un mélange de 10 à 40% en poids d'acrylonitrile,
   60 à 90% en poids d'un composé vinylaromatique,
   0 à 20% en poids d'un troisième monomère, en présence de 20 à 60% en poids d'un caoutchouc diène, après quoi on amène le polymère de base résultant à l'état fondu et on ajoute 0,1 à 25% en poids de monomères d'un composé vinylaromatique et un composé contenant des groupes carboxy et/ou imide, par rapport au polymère de base, dans un rapport molaire de 5:1 à 1:5, et à une température de 180 à 325° C.

3. Mélange polymère thermoplastique selon la revendication 1 ou 2, caractérisé en ce que le composant (b) contient 1 à 20% en poids de monomères d'un composé vinylaromatique et d'un composé contenant des groupes carboxy et/ou imide.

4. Mélange polymère thermoplastique selon l'une quelconque des revendications 1 à 3, caractérisé en ce que le composé vinylaromatique est le styrène et/ou l'alphaméthylstyrène.

5. Mélange polymère thermoplastique selon l'une quelconque des revendications 1 à 4, caractérisé en ce que le composé contenant des groupes carboxy et/ou imide est choisi parmi l'anhydride maléique, l'acide itaconique, l'acide citraconique, le N-phénylmaléimide, le maléimide et/ou un amide semi-acide.

6. Mélange polymère thermoplastique selon l'une quelconque des revendications 1 à 5, caractérisé en ce que le polymère comportant des groupes polaires est un polyamide.

7. Procédé de production d'un mélange polymère thermoplastique selon l'une quelconque des revendications 1 à 6, dans lequel on obtient le composant (b) à partir d'un polymère de base comprenant au moins un composé vinylaromatique et un caoutchouc diène auquel sont appliqués plusieurs monomères, caractérisé en ce que sur la chaîne principale du polymère thermoplastique, chaîne principale qui est formée d'au moins un caoutchouc diène et une ou plusieurs chaîne(s) latérale(s) formée(s) au moins d'un copolymère d'un composé vinylaromatique et d'acrylonitrile, on applique les monomères d'un composé vinylaromatique et d'un composé contenant des groupes carboxy et/ou imide dans un rapport molaire relatif de 5:1 à 1:5 en mélangeant ces mono mères dans un dispositif mélangeur avec la masse fondue du polymère de base à une température de 180 à 325°C et pendant une durée de séjour de 1 à 15 minutes, après quoi on mélange le composant résultant avec un polyamide fondu à une température de 200 à 250C°.

8. Article fabriqué tout ou partie à partir d'un mélange polymère selon l'une quelconque des revendications 1 à 6.

**Patentansprüche**

1. Thermoplastische Elastomermischung auf Basis einer vinylaromatischen Verbindung und Acrylnitril auf einem Kautschuk und eines thermoplastischen Polymers mit polaren Gruppen, dadurch gekennzeichnet, daß die Polymermischung aus:
   a) 5 bis 99 Gew.% eines thermoplastischen Polymers mit polaren Gruppen;
   b) 1 bis 95 Gew.% eines Pfropfcopolymers eines Copolymers einer vinylaromatischen Verbindung und Acrylnitril auf einem Dienkautschuk, wobei auf dem Kautschuk weiters 0,1 bis 25 Gew.% Monomere einer vinylaromatischen Verbindung und einer carboxy-und/oder imidenthaltenden Verbindung in einem Molverhältnis von 5:1 bis 1:5 vorhanden sind,
   besteht.

2. Thermoplastische Polymermischung nach Anspruch 1, dadurch gekennzeichnet, daß die Polymermischung aus:
   a) 20 bis 90 Gew.% eines thermoplastischen Polymers mit polaren Gruppen, und
   b) 10 bis 80 Gew.% einer Polymermischung besteht, die durch Polymerisieren von 40 bis 80 Gew.% einer Mischung von
   - 10 bis 40 Gew.% Acrylnitril;
   - 60 bis 90 Gew.% einer vinylaromatischen Verbindung;
   - 0 bis 20 Gew.% eines dritten Monomers;
   in Gegenwart von 20 bis 60 Gew.% eines Dienkautschuks erhalten wurde, worauf das erhaltene Basispolymer in einen geschmolzenen Zustand gebracht wird, zu dem 0,1 bis 25 Gew.% Monomere einer vinylaromatischen Verbindung und einer carboxy- und/oder imidenthaltenden Verbindung, berechnet auf das Basispolymer, in einem Molverhältnis von 5 : 1 bis 1 : 5 und bei einer Temperatur von 180°C bis 325°C zugegeben werden.

3. Thermoplastische Polymermischung nach einem der Ansprüche 1 bis 2, dadurch gekennzeichnet, daß die Komponente b) 1 bis 20 Gew.% Monomere einer vinylaromatischen Verbindung und einer carboxy- und/oder imidenthaltenden Verbindung enthält.

4. Thermoplastische Polymermischung nach einem der Ansprüche 1 bis 3, dadurch gekennzeichnet, daß die vinylaromatische Verbindung Styrol und/oder α-Methylstyrol ist.

5. Thermoplastische Polymermischung nach einem der Ansprüche 1 bis 4, dadurch gekennzeichnet, daß die carboxy- und/oder imidenthaltende Verbindung ausgewählt wird aus Maleinsäureanhydrid, Itaconsäure, Citraconsäure, N-Phenylmaleimid, Maleimid und/oder einem semi-Säureamid.

6. Thermoplastische Polymermischung nach einem der Ansprüche 1 bis 5, dadurch gekennzeichnet, daß das Polymer mit polaren Gruppen ein Polyamid ist.

7

7. Verfahren zur Herstellung einer thermoplastischen Polymermischung nach einem der Ansprüche 1 bis 6, worin die Komponente b) erhalten wird aus einem Basispolymer bestehend aus wenigstens einer vinylaromatischen Verbindung und einem Dienkautschuk mit einer Vielzahl von auf den Dienkautschuk aufgebrachten Monomeren, dadurch gekennzeichnet, daß auf der Hauptkette des thermoplastischen Polymers, die aus wenigstens einem Dienkautschuk und einer oder mehreren Seitenketten aufgebaut ist, welche Seitenketten aus wenigstens einem Copolymer einer vinylaromatischen Verbindung und Acrylnitril aufgebaut sind, Monomere einer vinylaromatischen Verbindung und einer carboxy- und imidenthaltenden Verbindung in einem relativen Molverhältnis von 5 : 1 bis 1 : 5 durch Mischen dieser Monomere in einer Mischvorrichtung mit der Schmelze des Basispolymers bei einer Temperatur von 180 bis 325°C und einer Verweilzeit von 1 bis 15 Minuten aufgebracht werden, wonach die erhaltene Komponente mit einem Polyamid in geschmolzenem Zustand bei einer Temperatur von 200 bis 250°C gemischt wird.

8. Gegenstand, der teilweise oder zur Gänze aus einer Polymermischung nach einem der Ansprüche 1 bis 6 hergestellt ist.

8